# EUROPÄISCHE PATENTSCHRIFT

(11) **EP 1 839 953 B1**
(45) Veröffentlichungstag und Bekanntmachung des Hinweises auf die Patenterteilung: **09.06.2010**
(21) Anmeldenummer: 07005519.9
(22) Anmeldetag: 17.03.2007
(51) Int. Cl.: B60R 13/07, B62D 25/00, B62D 29/00, B60R 13/08, B60R 13/06

(54) **Dichtungseinheit für ein Hohlprofil einer Fahrzeugkarosserie**
Sealing unit for a hollow profile of a car body
Unité d'étanchéité pour le profil creux d'une carrosserie de véhicule automobile

(30) Priorität: 31.03.2006 DE 102006014963
(43) Veröffentlichungstag der Anmeldung: 03.10.2007
(73) Patentinhaber: Dr. Ing. h.c. F. Porsche AG, 70435 Stuttgart (DE)
(72) Erfinder: Schiebel, Dieter, 70825 Korntal-Münchingen (DE); Baumann, Peter, 75249 Kieselbronn (DE); Neumann, Wolfgang, 71735 Eberdingen (DE)

(56) Entgegenhaltungen:
- EP-A- 0 978 405
- WO-A-97/49598
- WO-A-98/36944
- DE-A1- 10 049 226
- US-A1- 2005 017 542

## Beschreibung

Die vorliegende Erfindung bezieht sich auf eine Fahrzeugkarosserie gemäß Oberbegriff des Patentanspruchs 1.

Obwohl auf beliebige Fahrzeuge und Fahrzeugkarosserien anwendbar, werden die vorliegende Erfindung sowie die ihr zugrunde liegende Problematik in Bezug auf ein Hohlprofil einer Schwellerverstärkung einer Fahrzeugkarosserie näher erläutert.

Ein Schwellerbauteil einer Fahrzeugkarosserie liegt im Allgemeinen in einem Bereich, der unterschiedlichen und häufig wechselnden Umgebungsbedingungen ausgesetzt ist, wie zum Beispiel Feuchtigkeit und Abgase, welche einerseits Korrosion verursachen und andererseits in den Fahrgastraum eindringen können.

Dichtungseinheiten für Hohlprofile von verschiedenen Karosseriebauteilen sind im modernen Fahrzeugbau hinlänglich bekannt und umfassen im Wesentlichen in das Profil einsetzbare plattenförmige Teile, die von einer so genannten Quellschaumdichtung umgeben sind, welche als Abdichtung mit und Anpassung des plattenförmigen Teils an der Innenwand des Hohlprofils dient. Nachteilig dabei ist, dass eine Belüftung des Innenraums des Hohlprofils nicht erfolgt.

Zur Belüftung solcher Hohlprofile beschreibt die DE 100 49 226 A1 in eine als Abschottung bezeichnete Querwand dienende Dichtungseinheit ein Röhrchen einzusetzen. Hierbei wird es als nachteilig empfunden, dass die Belüftung kontinuierlich erfolgt, wobei gerade im Fall von Fahrzeugen Abgase in das Hohlprofil und somit auch in das Fahrzeug gelangen können. Die gattungsbildende US 2005/0017542 A1 zeigt eine Fahrzeugkarosserie mit einem Hohlprofil, in das eine Dichtungseinheit eingesetzt ist. Diese weist ein um eine Schwenkachse bewegbares Dichtelement auf, dessen Schwenkachse senkrecht zur Längsachse des Hohlprofils verläuft. Das Dichtelement ist in seiner Schließstellung durch eine Rastverbindung gesichert und kann nur manuell geöffnet werden. Die EP 978 405 A2 beschreibt einen Kraftstoffeinfüllstutzen mit einem Klappenventil, das in Schließstellung vorgespannt ist, also durch die Vorspannung immer in seine Schließstellung gedrängt wird.

Somit liegt der vorliegenden Erfindung die Aufgabe zugrunde, eine Dichtungseinheit für ein Hohlprofil einer Fahrzeugkarosserie zu schaffen, welche die oben genannten Nachteile beseitigt und insbesondere gegenüber vorbekannten Strukturen einen wirksamem Spritzschutz und gleichzeitig einen Abdichtung gegen Abgase, jedoch auch eine Belüftung des Hohlprofils bietet.

### VORTEILE DER ERFINDUNG

Diese Aufgabe wird erfindungsgemäß durch die Dichtungseinheit mit den Merkmalen gemäß Patentanspruch 1 gelöst.

Die der vorliegenden Erfindung zugrunde liegende Idee besteht darin, dass eine Dichtungseinheit für ein sich entlang einer Längsachse erstreckendes Hohlprofil einer Fahrzeugkarosserie, mit einem Rahmen, dessen Seitenwände in Richtung der Längsachse des Hohlprofils um ein bestimmtes Maß ausdehnbar und derart angeordnet sind, dass sie im Wesentlichen der Form des Querschnitts des Hohlprofils entsprechen, wobei die Seitenwände an ihrer Außenseite umlaufend mit einer Wanddichtung zur Abdichtung des Rahmens an der Innenwand des Hohlprofils versehen sind, innerhalb ihres Rahmens mindestens einen sich in Richtung der Längsachse des Hohlprofils erstreckenden Raumabschnitt umfasst, welcher mindestens ein bewegbares Dichtelement zur Abdichtung des Raumabschnitts in Richtung der Längsachse des Hohlprofils aufweist. Dadurch wird eine Dichtungseinheit für ein Hohlprofil geschaffen, welche einerseits einen Spritzschutz, eine Belüftung und auch eine gasdichte Abdichtung des Innenraums des Hohlprofils sicherstellt. Die vorliegende Erfindung weist gegenüber den oben genannten Ansätzen den Vorteil auf, dass eine Belüftung durch eine Öffnungsbewegung des bewegbaren Dichtungselementes, das vorzugsweise als Klappe ausgebildet ist, erfolgt. Hierbei wird die Bewegung der Klappen zum Beispiel durch Öffnen/Schließen der Fahrzeugtüren und den dabei entstehenden Druckstoß ausgelöst, wobei sich auch gleichzeitig ein vorteilhafter Druckausgleich ergibt. Ein weiterer Vorteil der erfindungsgemäßen Dichtungseinheit besteht darin, dass eine Schwenkachse so mit dem bewegbaren Dichtelement verbunden ist, dass das Dichtelement durch seine Schwerkraft den zugehörigen Raumabschnitt verschließt. Ein gasdichter Verschluss ist durch eine an der Klappe oder/und am Raumabschnitt angeordneten umlaufenden Dichtung gegeben.

Es wird bevorzugt, dass zwei Klappen vorgesehen sind, da dadurch eine günstige Verschlusswirkung erzielt wird.

In den Unteransprüchen finden sich vorteilhafte Ausgestaltungen und Verbesserungen der im Patentanspruch 1 angegebenen Dichtungseinheit.

### ZEICHNUNGEN

Die Erfindung wird im Folgenden anhand von Ausführungsbeispielen unter Bezugnahme auf die beiliegenden Figuren der Zeichnung näher erläutert.

Von den Figuren zeigen:
- Figur 1: eine Draufsicht auf eine Dichtungseinheit gemäß einem ersten Ausführungsbeispiel der vorliegenden Erfindung; und
- Figur 2: eine Schnittansicht der Dichtungseinheit nach Figur 1 längs einer Schnittlinie A-A.

### BESCHREIBUNG BEVORZUGTER AUSFÜHRUNGSBEISPIELE

In den Figuren der Zeichnung bezeichnen dieselben Bezugszeichen gleiche oder funktionsgleiche Komponenten, soweit nichts Gegenteiliges angegeben ist.

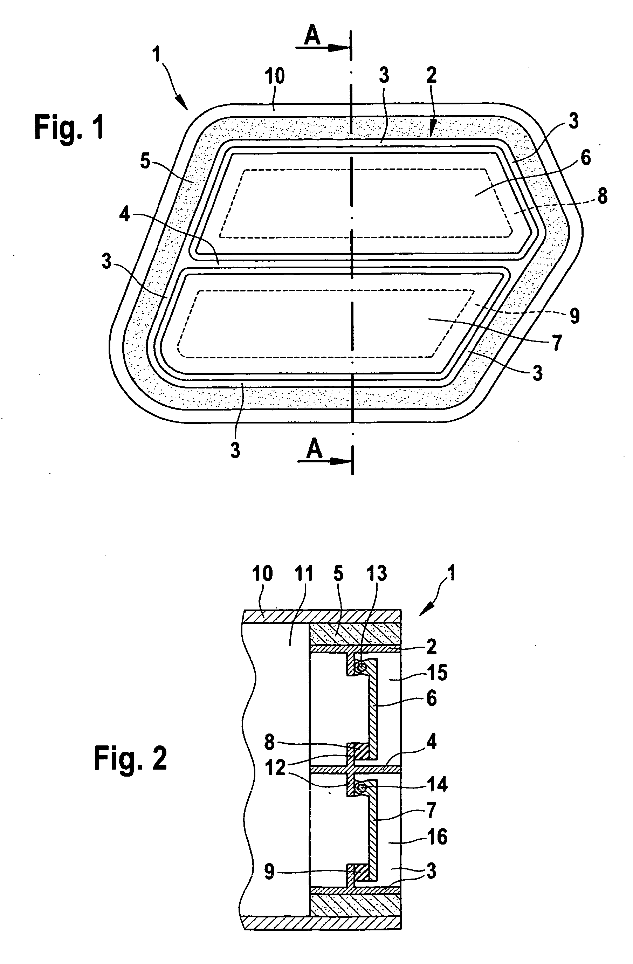

Figur 1 zeigt eine Draufsicht auf eine Dichtungseinheit 1, die in einen Endabschnitt eines Hohlprofils 10 eingesetzt ist. Die Dichtungseinheit 1 besitzt eine Gestalt gemäß dem Hohlprofil 10 einer nicht gezeigten Fahrzeugkarosserie.

Figur 1 zeigt eine Draufsicht auf eine Dichtungseinheit 1, die in einen Endabschnitt eines Hohlprofils 10 eingesetzt ist. Die Dichtungseinheit 1 besitzt eine Gestalt gemäß dem Hohlprofil 10 einer nicht gezeigten Fahrzeugkarosserie.

Die Dichtungseinheit 1 weist einen Rahmen 2 auf, dessen umlaufende Seitenwände 3 im Wesentlichen in Form des Querschnitts des Hohlprofils 10 angeordnet sind. Eine Querwand 4 teilt den Rahmen 2 in zwei Raumabschnitte 15, 16 (siehe Figur 2) auf. Dieses kann beispielsweise dergestalt ausgebildet sein, dass ein weiterer Rahmen in den Rahmen 2 eingebracht ist, zum Beispiel eingeklipst. Dieser weitere Rahmen trägt Dichtelemente 6, 7, die weiter unten näher beschrieben werden. Der Vorteil dieser Bauweise besteht darin, dass der weitere Rahmen erst nach erfolgten Be- bzw. Verarbeitungsschritten des Rahmens 2 in diesen einsetzbar ist, um eine Beeinflussung der Dichtelemente 6, 7 durch die Be- bzw. Verarbeitungsschritte zu vermeiden.

Der Rahmen 2 ist an seiner Außenseite zur Innenwand des Hohlprofils 10 hin mit einer Wanddichtung 5 umgeben, welche vorzugsweise eine so genannte Quellschaumdichtung ist, die beim Einsatz der Dichtungseinheit 1 in das Hohlprofil 10 aktiviert wird und sich entsprechend ausdehnt. Die Wanddichtung 5 erzeugt auf diese Weise eine Abdichtung des Rahmens 2 gegenüber dem Hohlprofil 10 und gleichzeitig eine Anpassung des Rahmens 2 an den Querschnitt des Hohlprofils 10 in einem bestimmten Ausmaß.

Die Raumabschnitte 15, 16 (Figur 2) sind jeweils mit einem Dichtelement 6, 7 verschlossen. Die Dichtelemente 6, 7 sind bewegbar, das heißt, jeweils um eine Schwenkachse 13, 14 verschwenkbar, wie in Figur 2 dargestellt ist und weiter unten erläutert wird.

Figur 2 zeigt eine Schnittansicht der Anordnung nach Figur 1 längs Schnittlinie A-A.

Die Dichtungseinheit 1 ist in diesem dargestellten Beispiel im Endabschnitt im Innenraum 11 des Hohlprofils 10 bündig mit seinem Ende eingesetzt. Aus der Figur 2 ist ersichtlich, dass sich die in diesem Beispiel gezeigte Ausführung der Dichtungseinheit 1 in Längsrichtung des Hohlprofils 10 um ein bestimmtes Maß erstreckt. Der erste Raumabschnitt 15 ist hier über dem zweiten Raumabschnitt 16 angeordnet. Beide Raumabschnitte 15, 16 sind senkrecht zur Längsachse des Hohlprofils 10 mit einem durchbrochenen Mittelsteg 12 versehen. Die Durchbrechung des Mittelstegs 12 ist jeweils in einem Raumabschnitt 15, 16 durch das jeweilige Dichtungselement 6, 7 verschlossen.

Die Dichtungselemente 6, 7 sind in dieser Ausführung als bewegbare Klappen ausgebildet, die jeweils an ihrer Oberseite um eine jeweilige Schwenkachse 13, 14 verschwenkbar an dem Mittelsteg 12 angebracht sind. Sie können auch in einer anderen Ausführung auch am Rahmen 2 verschwenkbar angebracht sein.

Die Dichtungselemente 6, 7 wirken mit Dichtungen 8, 9 zusammen, welche an ihrem Umfang bzw. am Umfang des jeweiligen Durchbruchs des Mittelstegs 12 oder an der Seite des jeweiligen Raumabschnitts 15, 16 (siehe auch gestrichelt Linien in Figur 1) vorgesehen sind. Diese klappenartigen Dichtungselemente 6, 7 sind so ausgestaltet, dass sie durch ihr Gewicht in die in Figur 2 dargestellte geschlossene Stellung verschwenken.

Sie werden geöffnet, indem zum Beispiel beim Öffnen/Schließen einer Fahrzeugtür ein Überdruck im Innenraum 11 des Hohlprofils 10 entsteht und sie nach außen verschwenkt. Die Dichtungselemente 6, 7 sind in diesem Beispiel in ihrer äußeren Form dem Querschnitt des Rahmens 2 angepasst. Sie können aber auch in anderer Gestalt ausgebildet sein.

Die Dichtungselemente 6, 7 können auch aus einem gummiartigen Werkstoff bestehen, welcher zusätzlich mit einem Gewicht an seiner Unterkante versehen sein kann, um ein selbständiges Schließen zu bewirken.

Die erfindungsgemäße Dichtungseinheit 1 schafft eine vorteilhafte Belüftung, einen wirkungsvollen Spritzschutz und auch gleichzeitig eine gasdichte Abdichtung des Innenraums 11 des Hohlprofils 10. Sie ist einfach herzustellen, beispielsweise aus Kunststoff als Spritzgussteil, und leicht einzubauen.

Obwohl die vorliegende Erfindung vorstehend anhand bevorzugter Ausführungsbeispiele beschrieben wurde, ist sie darauf nicht beschränkt, sondern auf vielfältige Weise modifizierbar.

So ist es möglich, dass mehr als zwei Raumabschnitte 15, 16 in dem Rahmen 2 der Dichtungseinheit 1 angeordnet sein können. Auch ihre Unterteilung kann anstelle der in Figur 1 und 2 gezeigten waagerechten zum Beispiel senkrecht ausgeführt sein.

Die Dichtungen 8, 9 können beispielsweise im Zweikomponenten-Spritzgussverfahren an den jeweiligen Bauteilen angebracht sein. Sie können auch am Mittelsteg 12 und gleichzeitig an den Dichtungselementen 6, 7 vorgesehen sein.

Die Öffnung in einem Raumabschnitt 15, 16, welche durch das jeweilige Dichtungselement 6, 7 verschließbar ist, kann zum Beispiel eine Vielzahl von Einzellöchern sein.

## Patentansprüche

1. Fahrzeugkarosserie mit einem sich entlang einer Längsachse erstreckenden Hohlprofil (10) und mit einer Dichtungseinheit (1) in dem Hohlprofil, mit einem Rahmen (2), dessen Seitenwände (3) in Richtung der Längsachse des Hohlprofils (10) um ein bestimmtes Maß ausdehnbar und derart angeordnet sind, dass sie im Wesentlichen der Form des Querschnitts des Hohlprofils (10) entsprechen, wobei die Seitenwände (3) an ihrer Außenseite umlaufend mit einer Wanddichtung (5) zur Abdichtung des Rahmens (2) an der Innenwand des Hohlprofils (10) versehen sind, wobei die Dichtungseinheit (1) innerhalb ihres Rahmens (2) mindestens einen sich in Richtung der Längsachse des Hohlprofils (10) erstreckenden Raumabschnitt (15, 16) umfasst, welcher mindestens ein bewegbares Dichtelement (6, 7) zur Abdichtung des Raumabschnitts (15, 16) in Richtung der Längsachse des Hohlprofils (10) aufweist, wobei das bewegbare Dichtelement (6, 7) um eine Schwenkachse (13, 14) verschwenkbar ist, die senkrecht zur Längsachse des Hohlprofils (10) angeordnet ist, **dadurch gekennzeichnet, dass** die Schwenkachse (13, 14) so mit dem bewegbaren Dichtelement (6, 7) verbunden ist, dass das Dichtelement (6, 7) durch seine Schwerkraft den zugehörigen Raumabschnitt (15, 16) verschließt.

2. Dichtungseinheit (1) nach Anspruch 1, **dadurch gekennzeichnet, dass** das bewegbare Dichtelement (6, 7) mit einer an ihm oder/und am Raumabschnitt (15, 16) angeordneten umlaufenden Dichtung (8, 9) zusammenwirkt.

3. Dichtungseinheit (1) nach einem der Ansprüche 1 oder 2, **dadurch gekennzeichnet, dass** das bewegbare Dichtelement (6, 7) eine Außenkontur aufweist, die im Wesentlichen dem Querschnitt des zugehörigen Raumabschnitts (15, 16) oder einem Abschnitt davon entspricht.

4. Dichtungseinheit (1) nach einem der Ansprüche 1 bis 3, **dadurch gekennzeichnet, dass** das bewegbare Dichtelement (6, 7) als eine Klappe ausgebildet ist.

5. Dichtungseinheit (1) nach Anspruch 4, **dadurch gekennzeichnet, dass** das bewegbare Dichtelement (6, 7) mit einem Gewicht versehen ist.

6. Dichtungseinheit (1) nach einem der Ansprüche 1 bis 3, **dadurch gekennzeichnet, dass** das bewegbare Dichtelement (6, 7) als ein flexibles Flächenelement mit einem Gewicht ausgebildet ist.

7. Dichtungseinheit (1) nach einem der Ansprüche 1 bis 6, **dadurch gekennzeichnet, dass** der Rahmen (2) mindestens zwei Raumabschnitte (15, 16) mit jeweils mindestens einem Dichtungselement (6, 7) aufweist.

## Claims

1. Vehicle body with a hollow profile (10) extending along a longitudinal axis and with a sealing unit (1) in the hollow profile, with a frame (2), the side walls (3) of which are expandable by a certain extent in the direction of the longitudinal axis of the hollow profile (10) and are arranged in such a manner that they substantially correspond to the shape of the cross section of the hollow profile (10), wherein the outer side of the side walls (3) are provided with a wall seal (5) in an encircling manner for sealing the frame (2) against the inner wall of the hollow profile (10), wherein, within its frame (2), the sealing unit (1) comprises at least one space section (15, 16) which extends in the direction of the longitudinal axis of the hollow profile (10) and has at least one movable sealing element (6, 7) for sealing the space section (15, 16) in the direction of the longitudinal axis of the hollow profile (10), and wherein the movable sealing element (6, 7) is pivotable about a pivot spindle (13, 14) arranged perpendicularly to the longitudinal axis of the hollow profile (10), **characterized in that** the pivot spindle (13, 14) is connected to the movable sealing element (6, 7) in such a manner that the gravitational force of the sealing element (6, 7) closes the associated room section (15, 16).

2. Sealing unit (1) according to Claim 1, **characterized in that** the movable sealing element (6, 7) interacts with an encircling seal (8, 9) arranged thereon and/or on the space section (15, 16).

3. Sealing unit (1) according to either of Claims 1 and 2, **characterized in that** the movable sealing element (6, 7) has an outer contour which substantially corresponds to the cross section of the associated space section (15, 16) or to a section thereof.

4. Sealing unit (1) according to one of Claims 1 to 3, **characterized in that** the movable sealing element (6, 7) is designed as a flap.

5. Sealing unit (1) according to Claim 4, **characterized in that** the movable sealing element (6, 7) is provided with a weight.

6. Sealing unit (1) according to one of Claims 1 to 3, **characterized in that** the movable sealing element (6, 7) is designed as a flexible sheetlike element with a weight.

7. Sealing unit (1) according to one of Claims 1 to 6, **characterized in that** the frame (2) has at least two space sections (15, 16) each having at least one sealing element (6, 7).

## Revendications

1. Carrosserie de véhicule comprenant un profilé creux (10) s'étendant le long d'un axe longitudinal, et une unité d'étanchéité (1) dans le profilé creux, avec un cadre (2) dont les parois latérales (3) sont disposées dans la direction de l'axe longitudinal du profilé creux (10) de manière à pouvoir s'étendre d'une mesure déterminée, et de telle sorte qu'elles correspondent essentiellement à la forme de la section transversale du profilé creux (10), les parois latérales (3) étant pourvues sur leur côté extérieur circonférentiellement d'un joint de paroi (5) pour l'étanchéité du cadre (2) contre la paroi intérieure du profilé creux (10), l'unité d'étanchéité (1) comprenant à l'intérieur de son cadre (2) au moins une portion d'espace (15, 16) s'étendant dans la direction de l'axe longitudinal du profilé creux (10), laquelle présente au moins un élément d'étanchéité (6, 7) déplaçable pour l'étanchéité de la portion d'espace (15, 16) dans la direction de l'axe longitudinal du profilé creux (10), l'élément d'étanchéité déplaçable (6, 7) pouvant pivoter autour d'un axe de pivotement (13, 14) qui est disposé perpendiculairement à l'axe longitudinal du profilé creux (10), **caractérisée en ce que** l'axe de pivotement (13, 14) est connecté à l'élément d'étanchéité déplaçable (6, 7) de telle sorte que l'élément d'étanchéité (6, 7) ferme la portion d'espace associée (15, 16) par sa force de pesanteur.

2. Unité d'étanchéité (1) selon la revendication 1, **caractérisée en ce que** l'élément d'étanchéité déplaçable (6, 7) coopère avec un joint (8, 9) circonférentiel disposé contre lui et/ou contre la portion d'espace (15, 16).

3. Unité d'étanchéité (1) selon l'une quelconque des revendications 1 ou 2, **caractérisée en ce que** l'élément d'étanchéité déplaçable (6, 7) présente un contour extérieur qui correspond essentiellement à la section transversale de la portion d'espace associée (15, 16) ou à une portion de celle-ci.

4. Unité d'étanchéité (1) selon l'une quelconque des revendications 1 à 3, **caractérisée en ce que** l'élément d'étanchéité déplaçable (6, 7) est réalisé sous forme de clapet.

5. Unité d'étanchéité (1) selon la revendication 4, **caractérisée en ce que** l'élément d'étanchéité déplaçable (6, 7) est pourvu d'un poids.

6. Unité d'étanchéité (1) selon l'une quelconque des revendications 1 à 3, **caractérisée en ce que** l'élément d'étanchéité déplaçable (6, 7) est réalisé sous forme d'élément de surface flexible avec un poids.

7. Unité d'étanchéité (1) selon l'une quelconque des revendications 1 à 6, **caractérisée en ce que** le cadre (2) présente au moins deux portions d'espace (15, 16) ayant respectivement au moins un élément d'étanchéité (6, 7).
